# EUROPÄISCHE PATENTANMELDUNG

(11) **EP 0 893 393 A2**
(43) Veröffentlichungstag der Anmeldung: **27.01.1999**
(21) Anmeldenummer: 98113024.8
(22) Anmeldetag: 13.07.1998
(51) Int. Cl.: B66F 9/075

(54) **Flurförderzeug**

(30) Priorität: 14.07.1997 DE 19730154
(71) Anmelder: STILL GMBH, D-22113 Hamburg (DE)
(72) Erfinder: Tügel, Caspar Dipl.-Ing., 20253 Hamburg (DE); Schröder, Werner-Gerorg Ing. MSc, 63762 Grossostheim (DE)
(74) Vertreter: Kasseckert, Rainer

(57) **Zusammenfassung**

Die Erfindung betrifft ein Flurförderzeug, insbesondere einen Gabelstapler, mit einem Rahmen und gegebenenfalls wenigstens einem an diesem Rahmen angeordneten Gegengewicht.

Erfindungsgemäß weisen der Rahmen und/oder das Gegengewicht (1) Mittel zur Aufnahme von wenigstens einem Schmutzfänger (2) auf.

Vorzugsweise sind die Mittel zur Aufnahme des bzw. der Schmutzfänger (2) als ein in den Rahmen und/oder das Gegengewicht (1) gegossene Tasche ausgebildet. Der oder die Schmutzfänger (2) sind in den Rahmen und/oder das Gegengewicht (1) einsteckbar und/oder einschiebbar ausgebildet und sind gegebenenfalls mittels einer Klemmvorrichtung (3) mit dem Rahmen und/oder dem Gegengewicht (1) verbunden.

Der zeitliche und damit auch der finanzielle Aufwand für die Montage und Demontage der Schmutzfänger bzw. Kotflügel verringert sich deutlich.

## Beschreibung

Die Erfindung betrifft ein Flurförderzeug, insbesondere einen Gabelstapler, mit einem Rahmen und gegebenenfalls mit Wenigstens einem an diesem Rahmen angeordneten Gegengewicht.

Schmutzfänger bzw. Kotflügel, vorzugsweise hergestellt aus Elastomer, werden an den Radausschnitten des Rahmens oder, falls es sich um ein Flurförderzeug, insbesondere einen Gabelstapler, mit einem an dem Rahmen angeordneten Gegengewicht handelt, an den Radausschnitten des Gegengewichts angeordnet, um den von den Rädern hochgeschleuderten Schmutz von dem Fahrzeug fernzuhalten.

Diese Schmutzfänger bzw. Kotflügel werden bisher mit je zwei Schrauben und Unterlegteilen an den Rahmen bzw. das Gegengewicht, an dem entsprechende Gewindebohrungen vorzusehen sind, geschraubt.

Aufgabe der vorliegenden Erfindung ist es, ein Flurförderzeug, insbesondere einen Gabelstapler, mit einem Rahmen und gegebenenfalls mit wenigstens einem an diesem Rahmen angeordneten Gegengewicht anzugeben, bei dem zum einen die Montage und Demontage derartiger Schmutzfänger bzw. Kotflügel erleichtert und zum anderen der Umfang der Bearbeitung des Rahmens und/oder des Gegengewichts verringert wird.

Dies wird erfindungsgemäß dadurch erreicht, daß der Rahmen und/oder das Gegengewicht Mittel zur Aufnahme von wenigstens einem Schmutzfänger aufweisen.

Eine besonders vorteilhafte Ausgestaltung des erfindungsgemäßen Flurförderzeuges ist dadurch gekennzeichnet, daß die Mittel zur Aufnahme von wenigstens einem Schmutzfänger als ein in den Rahmen und/oder das Gegengewicht gegossene Tasche ausgebildet sind.

Eine derartige Tasche läßt sich bei der Herstellung des Rahmens bzw. dem Gießen des Gegengewichts im wesentlichen kostenneutral realisieren. Insbesondere beim Gießen des Gegengewichts liegt die Tasche in der Ausformrichtung, sodaß keine Mehrkosten für den Gießvorgang entstehen. Der bisher erforderliche zeitaufwendige Produktionsschritt "Gewindebohren" kann dadurch entfallen. Auch der zeitliche und damit finanzielle Aufwand für die Montage und Demontage der Schmutzfänger bzw. Kotflügel verringert sich deutlich; für die Montage der Schmutzfänger genügt nunmehr - anstelle eines Schraubenziehers - ein Hammer.

Vorzugsweise sind der oder die Schmutzfänger einsteckbar und/oder einschiebbar in den Rahmen und/oder das Gegengewicht ausgebildet.

Die Erfindung weiterbildend wird vorgeschlagen, daß der oder die Schmutzfänger mittels einer Klemmvorrichtung mit dem Rahmen und/oder dem Gegengewicht des Flurförderzeuges verbunden sind.

Obwohl in der Regel auch ohne derartige Klemmvorrichtungen dauerhafte und belastbare Verbindungen zwischen dem Schmutzfänger und dem Rahmen bzw. dem Gegengewicht realisiert werden können, kann aus sicherheitstechnischen Überlegungen das Vorsehen einer Klemmvorrichtung sinnvoll sein.

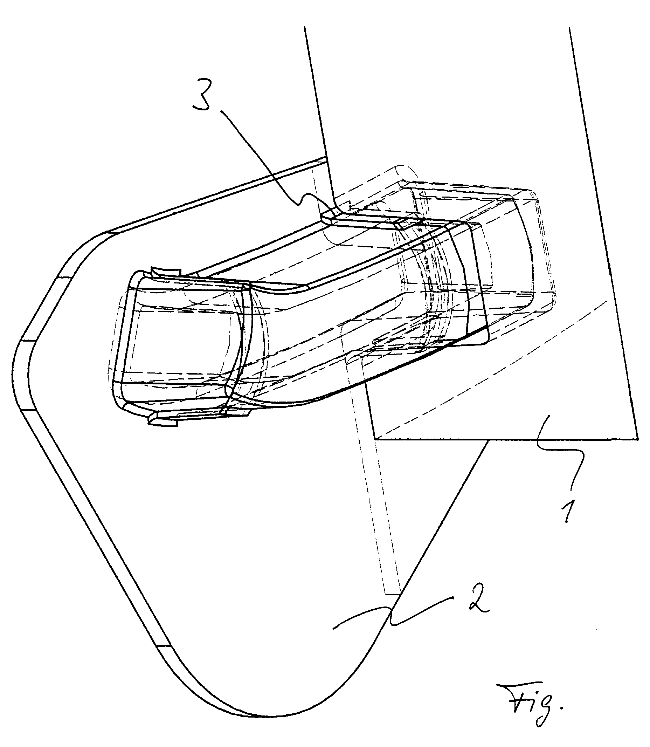

Das erfindungsgemäße Flurförderzeug sei anhand der Figur, die einen seitlichen Schnitt durch ein Gegengewicht (1) zeigt, näher erläutert.

Das Gegengewicht (1) weist als Mittel für die Aufnahme eines Schmutzfängers (2) eine Tasche auf, in die ein entsprechend geformter Schmutzfänger (2) eingesteckt oder eingeschoben wird. Dieser Schmutzfänger (2) kann optional eine Klemmvorrichtung (3) aufweisen. Sei einer entsprechenden Form und/oder einem entsprechenden Material des Schmutzfängers (2) erübrigt sich eine derartige Klemmvorrichtung (3) jedoch.

## Patentansprüche

1. Flurförderzeug, insbesondere Gabelstapler, mit einem Rahmen und gegebenenfalls wenigstens einem an diesem Rahmen angeordneten Gegengewicht, **dadurch gekennzeichnet**, daß der Rahmen und/oder das Gegengewicht (1) Mittel zur Aufnahme von wenigstens einem Schmutzfänger (2) aufweisen.

2. Flurförderzeug nach Anspruch 1, dadurch gekennzeichnet, daß die Mittel zur Aufnahme von wenigstens einem Schmutzfänger (2) als ein in den Rahmen und/oder das Gegengewicht (1) gegossene Tasche ausgebildet sind.

3. Flurförderzeug nach Anspruch 1 oder 2, dadurch gekennzeichnet, daß der oder die Schmutzfänger (2) in den Rahmen und/oder das Gegengewicht (1) einsteckbar und/oder einschiebbar ausgebildet sind.

4. Flurförderzeug nach einem der vorherigen Ansprüche, dadurch gekennzeichnet, daß der oder die Schmutzfänger (2) mittels einer Klemmvorrichtung (3) mit dem Rahmen und/oder dem Gegengewicht (1) verbunden sind.
